# EUROPÄISCHE PATENTSCHRIFT

(11) **EP 0 508 079 B1**
(45) Veröffentlichungstag und Bekanntmachung des Hinweises auf die Patenterteilung: **06.09.1995**
(21) Anmeldenummer: 92103272.8
(22) Anmeldetag: 26.02.1992
(51) Int. Cl.: B29C 47/50, B29C 47/76

(54) **Extruder-Zahnradpumpen-Kombination**
Extruder-gear pump combination
Combinaison pompe à engrenage et extrudeuse

(30) Priorität: 07.04.1991 DE 4111219
(43) Veröffentlichungstag der Anmeldung: 14.10.1992
(73) Patentinhaber: PAUL TROESTER MASCHINENFABRIK, D-30519 Hannover (DE)
(72) Erfinder: Gohlisch, Hans Joachim, Dipl.-Ing., W-3000 Hannover 81 (DE); Baumgarten, Wilfried, Dipl.-Ing., W-3017 Pattensen (DE)
(74) Vertreter: Junius, Walther, Dr.

(56) Entgegenhaltungen:
- WO-A-90/14939
- DE-A- 3 016 167
- US-A- 4 437 046
- PATENT ABSTRACTS OF JAPAN vol. 12, no. 21 (M-661)(2868) 22. Januar 1988
- PATENT ABSTRACTS OF JAPAN vol. 6, no. 242 (M-175)30. November 1982
- PATENT ABSTRACTS OF JAPAN vol. 10, no. 333 (M-534)(2389) 12. November 1986
- KUNSTSTOFFE Bd. 78, Nr. 3, M rz 1988, M NCHEN Seiten 261 - 268 G. MENGES ET AL

## Beschreibung

Die Erfindung betrifft eine Extruder-Zahnradpumpen-Kombination.

Für eine Präzisionsfertigung von Gummiteilen ist es erforderlich, daß die in die bei der Produktion verwendeten Formen eingelegten Preßrohlinge von exakt der Preßform angepaßten Gewicht und Volumen sind und daß sie frei von Luft- und Gaseinschlüssen sind. Anderenfalls ergeben sich bei einem Überschuß an Kautschukmischung in der Form an dem gefertigten Teil dünne Gummilappen, die dort an dem gefertigten Teil hängen, wo die beiden Formenteile aneinander gepreßt waren, oder es ergeben sich bei einem Unterschuß an Kautschukmischung in der Form Lufteinschlüße im Inneren des gefertigten Gummiteiles oder nicht richtig geformte Fertigteile.

In der EP-A-0 492 425, die zum Stand der Technik gemäß Art. 54(3) EPÜ gehört, ist eine Extruder-Zahnradpumpen-Kombination beschrieben, bei der zwischen Extruder und Zahnradpumpe ein Strainer angeordnet ist, ein Sieb, das harte, vor allem metallische Gegenstände zurückhält, die das Mundstück des Extrusionskopfes beschädigen könnten. Hierdurch wird eine sehr formgetreue Extrusion eines Streifens erreicht.

Die Erfindung vermeidet die Nachteile des Standes der Technik. Der Erfindung liegt die Aufgabe zugrunde, mit einfachen Mitteln und in einfacher Weise Kautschuk-Preßrohlinge mit der für eine Präzisionsherstellung erforderlichen Homogenität und gleichmässigen Dichte zu erzeugen.

Die Erfindung löst diese Aufgabe mit einer Extruder-Zahnradpumpen-Kombination für die Verwendung in einer Anlage zur Herstellung von aus einer Kautschukmischung bestehenden Preßrohlingen für die Teilefertigung in der Gummiindustrie, die mit einer Digitalsteuerung des Zahnradpumpenantriebes ausgestattet ist, bei der der Extruder lediglich eine für die Plastifizierung ausreichende Länge aufweist und die Zahnradpumpe zum Aufbau eines ausreichenden Förderdruckes ausgelegt ist, und bei der zwischen dem Extruder und der Zahnradpumpe eine Entgasungsstrecke angeordnet ist, wobei eine Schnecke mit förderweicher Charakteristik im Extruder und eine Zahnradpumpe mit fördersteifer Kennlinie verwendet sind.

Die jedem Extruder anhaftenden natürlichen Ausstoßschwankungen werden mit der Zahnradpumpe eliminiert und bei absoluter Drehzahltreue der Zahnradpumpe wird ein konstanter Ausstoß des Rohlingsprofils pro Zeiteinheit und damit größtmögliche Genauigkeit beim Metergewicht erreicht. Das führt dazu, daß bei exakt durchgeführten Schnitten aus dem Rohlingsstrang exakte Rohlinge gefertigt werden.

Es ist durch hierdurch möglich geworden, einen sehr kurz gebauten Entgasungsextruder einzusetzen, mit dem einerseits alle gasenden Bestandteile bzw. auch Gas- und/oder Lufteinschlüsse der Mischung entzogen werden und andererseits die Gefahr von Rückstau in die Vakuumzone des Extruders auszuschaltet wird, die bei Direktextrusion von kleinen Profilen mit hohen Ausformdrücken stets vorhanden ist.

Durch den Einsatz eines möglichst kurzen Extruders wird die thermische Belastung der verarbeiteten Mischung auf das zur Verarbeitung notwendige Maß herabgesetzt, welche bei langen Extrudern für hohen Ausformdruck erheblich höher ausfällt.

Die erreichten niedrigen Ausstoßtemperaturen tragen in erheblichem Maße dazu bei, daß auch thermisch besonders empfindliche Kautschukmischungen mit diesem Verfahren überhaupt erst verarbeitet werden können.

Die Präzision der Herstellung wird durch eine Druck/Drehzahlregelung für die Schnecke des Extruders, bei der der Druckgeber vorzugsweise auf der Einlaufseite der Zahnradpumpe, insbesondere unmittelbar vor den Zahnrädern angeordnet ist.

Das Wesen der Erfindung ist nachstehend anhand eines in der Zeichnung schematisch dargestellten Ausführungsbeispieles näher erläutert. Es zeigen:

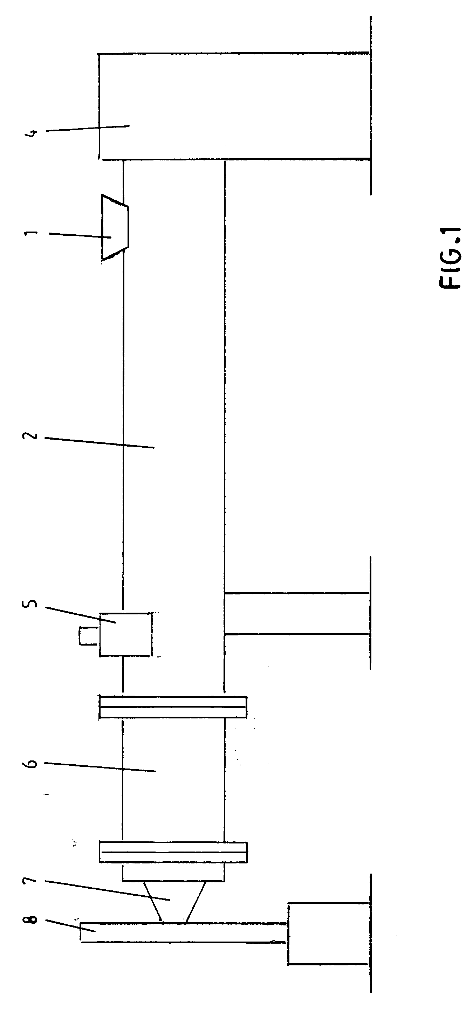

- Fig. 1: eine Seitenansicht der Anlage,
- Fig. 2: einen Schnitt durch die verwendete Zahnradpumpe.

Die zu Preßrohlingen zu verarbeitende Kautschukmischung wird durch den Trichter 1 in den Extruderzylinder 2 gegeben, in welchem eine Schnecke 3 durch einen Antrieb 4 umläuft und die Kautschukmischung plastifiziert. Im plastifizierten Zustand erreicht die Kautschukmischung die Entgasungsanlage 5, in welcher durch den Anschluß einer Evakuierungsvorrichtung Gas aus der Kautschukmischung herausgezogen wird. Die entgaste Kautschukmischung wird dann durch die Schnecke 3 der Zahnradpumpe 6 zugeführt. Beim Durchgang durch die Zahnradpumpe erhält die geförderte Kautschukmasse den erforderlichen Förderdruck, um in dem Spritzkopf 7 eingepreßt zu werden, welcher einen Strang erzeugt, von welchem die Rohlinge durch die Schneidevorrichtung 8 abgeschnitten werden.

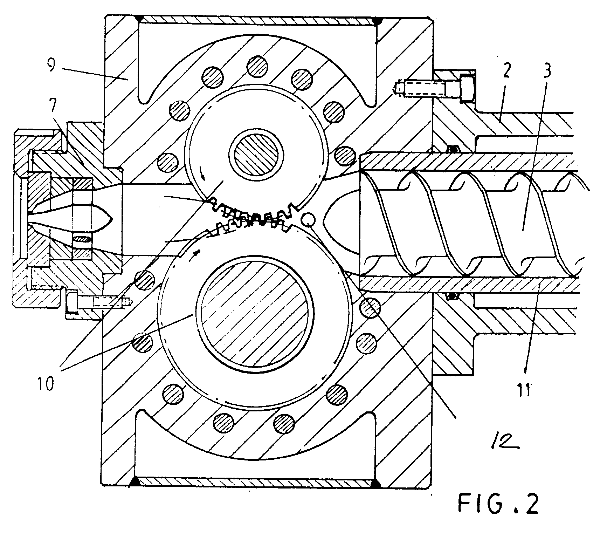

Die in Fig. 2 dargestellte Zahnradpumpe besteht aus einem Gehäuse 9 und zwei Zahnrädern 10. Die die Schnecke 3 umgebende Zylinderbuchse 11 ist möglichst weit in das Gehäuse 9 der Zahnradpumpe eingeführt, um die Spitze der Schnecke 3 bis möglichst dicht vor die Zahnräder 10 zu führen. Auf diese Weise wird erreicht, daß die mittels der Schnecke 3 im Extruderzylinder 2 plastifizierte Masse in diesem plastifizierten Zustand in den Bearbeitungseingriff durch die Zahnräder 10 kommt.

Ein Druckgeber 12 in einem nicht dargestellten Steuerungskreis dient der Druck-/Drehzahlreglung der Schnecke 3 im Extruder.

### Liste der Bezugszeichen:

- 1: Trichter
- 2: Extruderzylinder
- 3: Schnecke
- 4: Antrieb
- 5: Entgasungsanlage
- 6: Zahnradpumpe
- 7: Spritzkopf
- 8: Schneidevorrichtung
- 9: Gehäuse
- 10: Zahnräder
- 11: Zylinderbuchse
- 12: Druckgeber

## Patentansprüche

1. Extruder-Zahnradpumpen-Kombination,
für die Verwendung in einer Anlage zur Herstellung von aus einer Kautschukmischung bestehenden Preßrohlingen für die Teilefertigung in der Gummiindustrie,
die mit einer Digitalsteuerung des Zahnradpumpenantriebes ausgestattet ist,
bei der der Extruder (2,3) lediglich eine für die Plastifizierung ausreichende Länge aufweist und die Zahnradpumpe (6) zum Aufbau eines ausreichenden Förderdruckes ausgelegt ist,
und bei der zwischen dem Extruder (2,3) und der Zahnradpumpe (6) eine Entgasungsanlage (5) angeordnet ist,
wobei eine Schnecke (3) mit förderweicher Charakteristik im Extruder (2,3) und eine Zahnradpumpe (6) mit fördersteifer Kennlinie verwendet sind.

2. Extruder-Zahnradpumpen-Kombination nach Anspruch 1
gekennzeichnet durch
eine Druck/Drehzahlregelung für die Schnecke (3) des Extruders (2,3), bei der der Druckgeber (12) vorzugsweise auf der Einlaufseite der Zahnradpumpe (6), insbesondere unmittelbar vor den Zahnrädern (10) angeordnet ist.

## Claims

1. Combination extruder and gear pump for use in an installation for the production of press blanks made of a rubber mixture for manufacturing of parts in the rubber industry, which is equipped with a digital control system for the gear pump drive, in which the extruder (2, 3) only exhibits a sufficient length for plasticising and the gear pump (6) is designed to produce a sufficient delivery pressure, and in which a degassing unit (5) is disposed between the extruder (2, 3) and the gear pump (6), using a screw (3) with a characteristic for low-viscosity delivery in the extruder (2, 3) and a gear pump (6) with a characteristic for high-viscosity delivery.

2. Combination extruder and gear pump according to claim 1,
characterised by pressure/speed control for the screw (3) of the extruder (2, 3) in which the pressure sensor (12) is preferably disposed on the inlet side of the gear pump (6), in particular immediately in front of the gears (10).

## Revendications

1. Combinaison pompe à engrenage/extrudeuse,
destinée à être utilisée dans une installation pour produire des ébauches de moulage par compression, faites d'un mélange de caoutchouc, en vue de la fabrication de pièces dans l'industrie du caoutchouc,
qui est équipée d'une commande numérique de l'entraînement de la pompe a engrenage,
dont l'extrudeuse (2, 3) possède seulement une longueur suffisante pour la plastification et la pompe à engrenage (6) est conçue pour établir une pression de refoulement suffisante,
et dans laquelle un système de dégazage (5) est agencé entre l'extrudeuse (2,3) et la pompe à engrenage (6),
avec utilisation d'une vis (3) à caractéristique de transport en douceur dans l'extrudeuse (2, 3) et d'une pompe à engrenage (6) à courbe caractéristique de transport dure .

2. Combinaison pompe à engrenage/extrudeuse selon la revendication 1, caractérisée par une régulation de pression/vitesse de rotation de la vis (3) de l'extrudeuse (2, 3), pour laquelle le capteur de pression (12) est placé de préférence du côté de l'entrée de la pompe à engrenage (6), en particulier directement devant les pignons (10).
